# EUROPÄISCHE PATENTSCHRIFT

(11) **EP 3 384 817 B1**
(45) Veröffentlichungstag und Bekanntmachung des Hinweises auf die Patenterteilung: **09.12.2020**
(21) Anmeldenummer: 18164610.0
(22) Anmeldetag: 28.03.2018
(51) Int. Cl.: A47J 37/06, F24C 15/16

(54) **GARAUFLAGEVORRICHTUNG ZUR ZUBEREITUNG EINES GARGUTS**
COOKING SUPPORT DEVICE FOR PREPARING AN ITEM TO BE COOKED
INSTALLATION DE CUISSON DESTINÉE À LA PRÉPARATION D'UN PRODUIT À CUIRE

(30) Priorität: 07.04.2017 EP 17000593
(43) Veröffentlichungstag der Anmeldung: 10.10.2018
(73) Patentinhaber: V-Zug AG, 6300 Zug (CH)
(72) Erfinder: Degelo, Thomas, 8908 Hedingen (CH); Thürlemann, Samuel, 6300 Zug (CH); von Freeden, Martin, 8700 Küsnacht (CH)
(74) Vertreter: Sutter, Kurt

(56) Entgegenhaltungen:
- EP-A1- 2 510 844
- WO-A1-2016/203123
- DE-U1- 20 215 979

## Beschreibung

### Gebiet der Erfindung

Die Erfindung betrifft eine Garauflagevorrichtung, insbesondere eine Teppan-Yaki Garauflagevorrichtung, mit einem Boden aus Metall.

### Hintergrund

Verschiedene Garauflagevorrichtungen sind bekannt, welche einen ferromagnetischen Boden aufweisen, um die Energie eines Induktionskochfelds zu absorbieren. Durch Einschalten des Induktionskochfeldes wird der Boden der Garauflagevorrichtung erwärmt und das Gargut auf der Garauflagevorrichtung gegart. Garauflagevorrichtungen weisen Griffe auf, an welchen die Garauflagevorrichtung festgehalten werden kann. Die Griffe sind derart angeordnet und ausgestaltet, dass sie sich möglichst nicht erwärmen.

WO 2016/023123 beschreibt eine Pfanne mit einem rinnenförmigen Rand. Der Boden besitzt eine untere Schicht aus ferromagnetischem Material, damit die Pfanne auf Induktionsgeräten verwendet werden kann. Die obere Schicht ist aus einer Stahllegierung und bildet den Rand der Pfanne. Es ist ein Griff vorgesehen, der über ein Befestigungselement abnehmbar mit dem Boden verbunden ist. Weiterer Stand der Technik ist der EP 2510844 zu entnehmen.

### Darstellung der Erfindung

Es ist Aufgabe der Erfindung, eine Garauflagevorrichtung bereitzustellen, welche einfach handhabbar ist.

Die Aufgabe wird von der Garauflagevorrichtung gemäss dem unabhängigen Vorrichtungsanspruch gelöst. Demgemäss weist die Garauflagevorrichtung, insbesondere eine Teppan-Yaki Garauflagevorrichtung, einen Boden aus Metall auf. Der Boden aus Metall umfasst einen ersten Bereich mit ferromagnetischem Metall, und einen zweiten Bereich ohne ferromagnetisches Metall.

Bereiche sind als Abschnitte auf einer horizontalen Ebene zu sehen. Mit anderen Worten wird die Bodenfläche in Bereiche unterteilt. Eine Bereichsgrenze ist vertikal den Boden durchlaufend.

Insbesondere ist unter dem Boden derjenige Teil der Garauflagevorrichtung zu verstehen, welcher sich von der Auflagefläche, d.h. von der Unterseite der Garauflagevorrichtung, welche beim bestimmungsgemässen Gebrauch das Kochfeld berührt, vertikal über eine Länge von maximal 3 cm, insbesondere maximal 2 cm, insbesondere maximal 1 cm, insbesondere maximal 0.5 cm, vertikal nach oben erstreckt.

Bei der erfindungsgemäßen zweiteiligen Konstruktion der Garvorrichtung mit Garplatte und Haltevorrichtung ist der Boden bei der Garplatte der horizontale Bereich.

Die genannte Aufteilung in zwei Bereiche hat den Vorteil, dass die Garauflagevorrichtung im Einsatz auf einem Induktionskochfeld lediglich im ersten Bereich Induktionsenergie absorbiert und in Wärme umwandelt, weil im ersten Bereich ein ferromagnetisches Metall vorhanden ist.

Im zweiten Bereich wird mittels Induktion keine Wärme induziert, da kein ferromagnetisches Metall vorhanden ist. Der zweite Bereich könnte sich aber beispielsweise mit vom ersten Bereich zufliessender Wärmeenergie erwärmen. Demnach wird der zweite Bereich vergleichsweise nur geringfügig erwärmt, sodass wärmeempfindliche Komponenten, z.B. ein Haftelement oder ein Griff zum Halten der Garauflagevorrichtung, am zweiten Bereich angeordnet werden kann.

Die Garauflagevorrichtung umfasst eine Garplatte und eine die Garplatte haltende Haltevorrichtung. Insbesondere ist die Haltevorrichtung als ein Halterahmen ausgestaltet.

Der erste Bereich ist Bestandteil der Garplatte und der zweite Bereich ist Bestandteil der Haltevorrichtung. Dies hat den Vorteil, dass die Haltevorrichtung auf einem Induktionskochfeld vergleichsweise wenig erwärmt wird. Dadurch wird einerseits nicht unnötig Wärmenergie an einen Ort befördert, an welchem gar nicht gegart werden soll, und andererseits kann die Garauflagevorrichtung an der Haltevorrichtung von einem Benutzer angefasst werden, ohne dass er sich die Hände verbrennt.

Insbesondere sind die Garplatte und die Haltevorrichtung voneinander trennbar.

Durch die Trennbarkeit der Garplatte von der Haltevorrichtung kann die Garauflagevorrichtung in unterschiedlichen Geräten genutzt werden. Beispielsweise kann die Garplatte getrennt von der Haltevorrichtung in einen Backofen oder in ein Dampfgargerät eingeschoben werden, um Gargüter vorzuwärmen oder fertig zu garen. Die Garplatte kann für sich alleine auch in einen Geschirrspüler zur Reinigung oder in einen Kühlschrank zum Kühlen des Garguts eingelegt werden. Die Garplatte in Kombination mit der Haltevorrichtung kann zur Benutzung auf einem Kochfeld oder zum Servieren auf einem Tisch verwendet werden, wobei mittels der Haltevorrichtung die Garplatte in einfacher Weise auf dem Kochfeld positioniert und von diesem auch wieder entfernt werden kann.

In einer besonderen Ausführungsform ist im ersten Bereich die unterste Materialschicht aus ferromagnetischem Metall. Durch die Anordnung der ferromagnetischen Metallschicht ganz unten kann die Induktionsenergie besonders gut absorbiert werden.

Mit Vorteil ist der erste Bereich zusammenhängend und der erste Bereich nimmt mindestens 50%, insbesondere mindestens 80%, insbesondere mindestens 90%, insbesondere mindestens 95%, der gesamten Bodenfläche der Garauflagevorrichtung ein. Folglich umfasst die Garauflagevorrichtung ein vergleichsweise grosses, einstückiges Element aus ferromagnetischem Metall, welches Induktionsenergie absorbiert. Insbesondere erstreckt sich eine Schicht aus ferromagnetischem Metall über die gesamte Bodenfläche der Garplatte.

Mit Vorteil ist an der Unterseite des zweiten Bereichs mindestens ein Haftelement angeordnet ist. Da das Haftelement an demjenigen Bereich angeordnet ist, welcher kein ferromagnetisches Metall aufweist, gelangt nur wenig Wärmeenergie zum Haftelement. Dadurch kann für das Haftelement ein Material gewählt werden, welches gute Hafteigenschaften hat, aber nicht unbedingt besonders hitzebeständig sein muss.

In einer besonderen Ausführungsform weist das mindestens eine Haftelement einen Haftreibungskoeffizienten auf, welcher grösser, insbesondere doppelt so gross, insbesondere dreimal so gross, insbesondere fünfmal so gross, ist als der Haftreibungskoeffizient des ferromagnetischen und/oder des nicht-ferromagnetischen Metalls. Die Vergleichsmessung kann beispielsweise beim Drücken gegen ein Glaskeramikkochfeld erfolgen.

Durch die Wahl eines Materials für das Haftelement mit einem grossen Reibungskoeffizienten steht und haftet die Garauflagevorrichtung stabil auf einem Kochfeld, auch wenn Kräfte auf die Garauflagevorrichtung wirken. Dadurch ist es möglich, dass der Benutzer die Gargüter auf der Garauflagevorrichtung, insbesondere auf der Garplatte, bewegt, verrührt etc., ohne dass sich die Garauflagevorrichtung auf dem Kochfeld verschieben würde. Der Benutzer muss somit während der Zubereitung der Gargüter auf der Garauflagevorrichtung diese nicht mit einer Hand festhalten, um ein Verschieben auf dem Kochfeld zu verhindern.

Insbesondere besteht das mindestens eine Haftelement aus einem Nichtmetall, insbesondere aus Kunststoff, insbesondere aus Silikon.

Mit Vorteil weist das mindestens eine Haftelement an seiner Unterseite gegen eine Glaskeramikfläche einen Haftreibungskoeffizienten grösser als 0.7, insbesondere grösser 1, insbesondere grösser als 2, insbesondere grösser als 5, auf.

Insbesondere weist das mindestens eine Haftelement eine Mehrzahl von Noppen auf. Dadurch besteht an verschiedenen Punkten des Bodens der Garauflagevorrichtung eine Haftwirkung, was zu einer besonders guten Stabilität der Garauflagevorrichtung auf dem Kochfeld führt.

In einer besonderen Ausführungsform stützt die Garplatte beim Abstellen der Garauflagevorrichtung auf einer Ebene sich nicht nach unten auf die Haltevorrichtung ab.

Insbesondere weisen die Haltevorrichtung einen ersten horizontalen Stützbereich und die Garplatte einen zweiten horizontalen Stützbereich auf, wobei der vertikale Abstand zwischen dem ersten Stützbereich und der Unterseite der Haltevorrichtung kleiner, insbesondere mehr als 1 mm kleiner, insbesondere mehr als 3 mm kleiner, als der vertikale Abstand zwischen dem zweiten Stützbereich und der Unterseite der Garplatte ist, insbesondere wobei der erste Stützbereich und der zweite Stützbereich gegeneinander gerichtet sind.

Mit anderen Worten steht die Garplatte beim Kochen direkt auf dem Kochfeld und stützt sich nicht auf der Haltevorrichtung ab. Die Garplatte wird von der Haltevorrichtung nur in horizontaler Richtung geführt. Dadurch bilden sich lediglich kleine Berührungsflächen zwischen der Garplatte und der Haltevorrichtung, sodass die in der Garplatte induzierte Wärme nur geringfügig auf die Haltevorrichtung überfliesst und die Haltevorrichtung sich dadurch nicht zu stark erwärmt.

Die Haltevorrichtung weist ein Blechteil auf, wobei das Blechteil derart angeordnet und ausgestaltet ist, dass es die Garplatte, insbesondere in beide Horizontalrichtungen, horizontal führt, und/oder wobei die Garplatte an einen vertikalen Abschnitt des Blechteils ansteht.

Im Weiteren weist die Haltevorrichtung eine Greifvorrichtung aus Holz auf und das Blechteil ist gegen die Greifvorrichtung mittels einem Isolierelement aus Kunststoff, insbesondere aus Silikon, isoliert. Insbesondere kann das Blechteil Löcher aufweisen, sodass der Wärmetransfer über das Blechteil nur geringfügig möglich ist.

In einer besonderen Ausführungsform ist das nicht-ferromagnetische Metall Aluminium oder Kupfer.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Garauflagevorrichtung, wobei die Garplatte auf der Haltevorrichtung angeordnet ist,
Fig. 2 eine Garauflagevorrichtung, wobei die Haltevorrichtung und die Garplatte voneinander getrennt sind,
Fig. 3 eine Seitenansicht der Garauflagevorrichtung,
Fig. 4 eine Detailansicht eines Ausschnitts aus der Fig. 3,
Fig. 5 eine Schnittzeichnung mit Blick auf den Übergang von Garplatte zur Haltevorrichtung, und
Fig. 6 eine Explosionszeichnung der Haltevorrichtung.

### Weg zur Ausführung der Erfindung

Im Folgenden werden die Begriffe "oben", "unten", "Oberseite", "Unterseite" etc. verwendet. Diese Begriffe beziehen sich auf eine Garauflagevorrichtung, wie sie verwendungsgemäss beispielsweise auf einem Kochfeld positioniert wird. D.h. die Oberseite der Garplatte ist diejenige Seite, auf welche das Gargut angeordnet wird, um das Gargut zu garen.

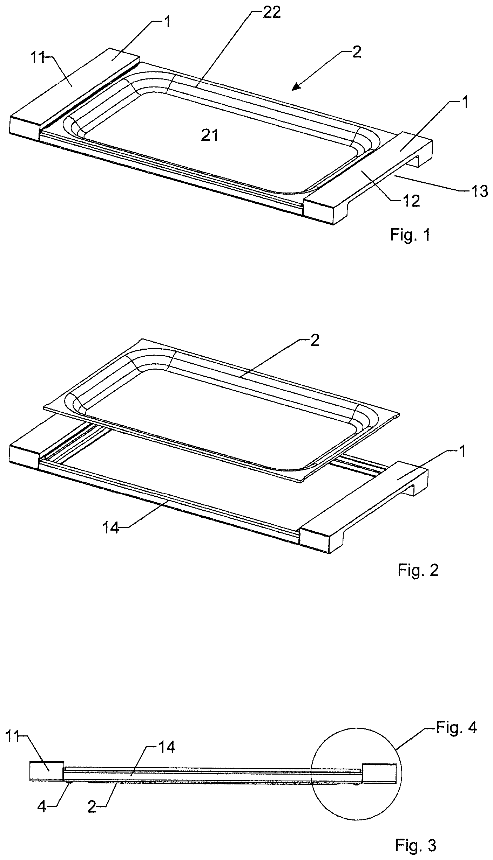

In Fig. 1 wird eine Garauflagevorrichtung gezeigt, welche eine Haltevorrichtung 1 und eine Garplatte 2 aufweist. Die Garplatte 2 umfasst einen Boden 21, auf welchem das Gargut gegart werden kann, und einen Rand 22, welcher die Garplatte 2 umgibt. Die Garplatte 2 besteht teilweise aus einem ferromagnetischen Material. Aufgrund dieser Materialeigenschaft wird auf einem aktivierten Induktionskochfeld in der Garplatte 2 Induktionswärme generiert.

Die Haltevorrichtung 1 weist zwei Greifvorrichtungen 11 und 12 auf. Diese sind an zwei gegenüberliegenden Seiten der rechteckig ausgestalteten Garplatte 2 angeordnet und erstrecken sich über die gesamte Seitenlänge der Garplatte 2. Die Greifvorrichtungen 11 und 12 bestehen mindestens teilweise aus Holz, sodass die von einem Kochfeld auf die Garplatte 2 übertragene oder in der Garplatte 2 induzierte Wärme nur in geringem Masse auf die Greifvorrichtungen 11 und 12 übertragen wird. Der Benutzer kann somit auch unmittelbar nach oder während des Garvorgangs die Garauflagevorrichtung an den Greifvorrichtungen 11 und 12 greifen und transportieren, ohne dass er sich die Hände verbrennt.

Die Greifvorrichtungen 11 und 12 weisen eine Ausnehmung 13 auf. Diese ermöglicht, dass die Haltevorrichtung 1 von aussen untergriffen werden kann, um die Garauflagevorrichtung mit Händen zu tragen. Die Hand greift in die Ausnehmung 13 hinein. Die Ausnehmung 13 ist derart in der Haltevorrichtung 1 angeordnet, dass die Haltevorrichtung 1 eine umgekehrte U-Form aufweist.

In Fig. 2 ist dargestellt, wie die Garplatte 2 von der Haltevorrichtung 1 getrennt werden kann. Dadurch wird sichtbar, dass die Haltevorrichtung 1 einen Halterahmen 14 aufweist, an dessen seitlichen Enden die beiden Greifvorrichtungen 11 und 12 angeordnet sind. Der Halterahmen 14 ist nach unten gerichtet und nahe zur Auflagefläche angeordnet. Er bildet somit einen Teil des Bodens der Garauflagevorrichtung.

Der Halterahmen besteht aus einem nicht ferromagnetischen Metall. Aufgrund dieser Materialeigenschaft wird im Halterahmen 14 auf einem aktivierten Induktionskochfeld keine Induktionswärme generiert.

Somit umfasst die Garauflagevorrichtung einen ersten Bereich mit ferromagnetischem Metall, nämlich die Garplatte, und einen zweiten Bereich mit nicht-ferromagnetischem Metall, nämlich der Halterahmen 14.

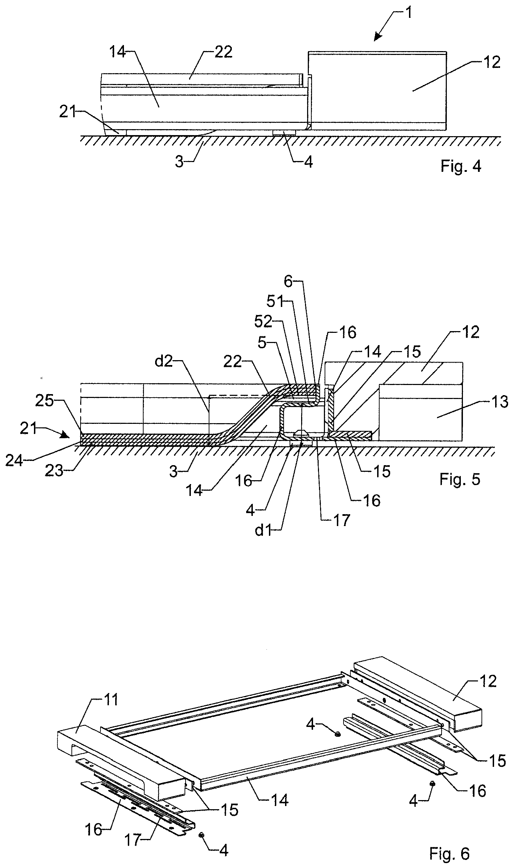

Fig. 3 zeigt eine Seitenansicht der Garauflagevorrichtung. Der umkreiste Bereich wird in Fig. 4 detaillierter dargestellt. In der Fig. 4 wird gezeigt, wie die Garauflagevorrichtung auf einem Induktionskochfeld 3 abgestellt ist. An der Unterseite des Halterahmens 14 sind insgesamt vier Haftelemente 4 angeordnet, welche als Noppen ausgestaltet sind. In der Fig. 4 ist eines davon sichtbar. Die Haltevorrichtung 1 wird mittels den Haftelementen 4 auf dem Induktionskochfeld 3 abgestützt. Die Haftelemente 4 bestehen aus Silikon und weisen deshalb einen hohen Haftreibungskoeffizienten auf. Dies hat den Vorteil, dass beim Manipulieren der Gargüter, beispielsweise beim Rühren oder Wenden der Gargüter, die Garauflagevorrichtung sich relativ zum Kochfeld nicht verschiebt, oder zumindest nur dann verschiebt, wenn besonders hohe Kräfte auf die Garauflagevorrichtung wirken.

Die Garplatte 2 ist innerhalb der Haltevorrichtung 1 angeordnet und wird vom Halterahmen 14 umgeben. Dadurch wird die Garplatte 2 relativ zur Haltevorrichtung 1 in Position gehalten. Die Haltevorrichtung 1 definiert die Position der Garplatte 2 allerdings nur in der horizontalen Richtung. In vertikaler Richtung hingegen wird die Garplatte 2 von der Haltevorrichtung 1 nicht getragen, sondern steht direkt und von selbst auf dem Induktionskochfeld 3. In der Fig. 4 ist gut sichtbar, wie der Boden 21 der Garplatte 2 das Induktionskochfeld 3 gegen unten berührt. Die Garplatte 2 stützt sich somit nicht auf der Haltevorrichtung 1 in vertikaler Richtung ab. Zwischen dem Rand 22 der Garplatte 2 und der Haltevorrichtung 1 ist deshalb ein Luftspalt 5 vorhanden, wenn die Garauflagevorrichtung auf einer Ebene abgestützt ist. Dies ist in der Fig. 5 sichtbar, welche einen Schnitt durch die Garauflagevorrichtung in Seitenansicht zeigt. Mit anderen Worten weist die Haltevorrichtung 1 einen ersten horizontalen Stützbereich 51 und die Garplatte 2 einen zweiten horizontalen Stützbereich 51 auf, welche gegeneinander gerichtet sind, wobei der vertikale Abstand d1 zwischen dem ersten Stützbereich 51 und der Unterseite der Haltevorrichtung kleiner ist als der Abstand d2 zwischen dem zweiten horizontalen Stützbereich 51 und der Unterseite der Garplatte 2.

Die Fig. 5 zeigt noch weitere Details der Garauflagevorrichtung. Bei der Garplatte 2 handelt es sich um eine mehrschichtige Garplatte 2. Sie weist drei Schichten 23, 24, 25 auf. In einer alternativen Ausführungsform kann die Garplatte aus mehr als drei Schichten aufweisen. Die unterste Schicht 23 besteht aus ferromagnetischem Metall. Sie absorbiert Induktionsenergie vom Induktionskochfeld und generiert dadurch die für das Garen notwendige Wärme. Die mittlere Schicht 24 besteht aus Aluminium. Aluminium weist eine besonders gute Wärmeleitfähigkeit auf und sorgt dafür, dass die in der untersten Schicht 23 generierte Wärme möglichst gleichmässig auf der Garplatte 2 verteilt wird. Bei der obersten Schicht 25 handelt es sich um ein Lebensmittelkontaktmaterial, beispielsweise Teflon, Keramik oder Chromstahl. Auf der obersten Schicht 25 werden die Gargüter zum Garen positioniert.

Im Weiteren ist in Fig. 5 auch die Haltevorrichtung 1 detailliert dargestellt. Diese umfasst eine Greifvorrichtung 12, ein waagrechtes und ein senkrechtes Isolierelement 15 und ein gebogenes Blechteil 16. Der Rand 22 der Garplatte 2 stösst an den oberen vertikalen Abschnitt des Blechteils 16 wodurch sich ein Kontakt 6 zwischen der Garplatte 2 und der Haltevorrichtung 1 bildet. Durch diesen Kontakt 6 wird die Garplatte 2 von der Haltevorrichtung 1 in horizontaler Richtung in Position gehalten. Beim Kontakt 6 handelt es sich um die einzige Berührungsfläche zwischen der Garplatte 2 und der Haltevorrichtung 1, sofern die Garauflagevorrichtung auf einer Ebene, insbesondere dem Induktionskochfeld 3, abgestellt ist. Über den Kontakt 6 fliesst in der Garplatte 2 induzierte Wärme auf das Blechteil 16. Die Wärme fliesst sodann weiter entlang des Blechteils 16 nach unten, zum Isolierelement 15 und anschliessend zur Greifvorrichtung 12. Aufgrund des flächenmässig kleinen Kontakts 16, der im Blechteil 16 vorhandenen Löcher 17 und des Isolierelements 15 gelangt nur wenig Wärme von der Garplatte 2 bis zu den Greifvorrichtungen 11 und 12. Dadurch werden die Greifvorrichtungen 11 und 12 nur geringfügig erwärmt und können von einem Benutzer auch während oder kurz nach einem Garvorgang angefasst werden, ohne dass sich der Benutzer die Hände verbrennt.

Die Fig. 6 zeigt eine Explosionszeichnung der einzelnen Elementen.

Anmerkungen:
- In der Fig. 5 ist zu beachten, dass das Haftelement 4 nicht am Blechteil 16 sondern am Halterahmen 14 angeordnet ist.
- Da die gesamte Garplatte 2 eine Schicht aus ferromagnetischem Metall aufweist, bildet die gesamte Garplatte 2 den ersten Bereich. Dieser zusammenhängende erste Bereich stellt dadurch mehr als 95% der gesamten Fläche des Bodens aus Metall dar. Die restliche Fläche des Bodens aus Metall bildet der Halterahmen 14 und stellt den zweiten Bereich dar.

## Patentansprüche

1. Garauflagevorrichtung, insbesondere eine Teppan-Yaki Garauflagevorrichtung, umfassend eine Garplatte (2) und eine die Garplatte (2) haltende Haltevorrichtung (1), einen Boden (14, 21) aus Metall, aufweisend einen ersten Bereich mit ferromagnetischem Metall (21), wobei der erste Bereich Bestandteil der Garplatte (2) ist, und einen zweiten Bereich ohne ferromagnetisches Metall (14), wobei der zweite Bereich Bestandteil der Haltevorrichtung (1) ist,
**dadurch gekennzeichnet, dass** die Haltevorrichtung (1) ein Blechteil (16) aufweist, das derart angeordnet und ausgestaltet ist, dass es die Garplatte (2) horizontal führt, und/oder die Garplatte (2) an einen vertikalen Abschnitt des Blechteils (16) ansteht, wobei die Haltevorrichtung (1) eine Greifvorrichtung (11, 12) aus Holz aufweist und das Blechteil (16) gegen die Greifvorrichtung (11, 12) mittels einem Isolierelement (15) aus Kunststoff isoliert ist.

2. Garauflagevorrichtung nach einem der vorangehenden Ansprüche, wobei die Haltevorrichtung (1) als einen Halterahmen (14) ausgestaltet ist.

3. Garauflagevorrichtung nach einem der vorangehenden Ansprüche, wobei die Garplatte (2) und die Haltevorrichtung (1) voneinander trennbar sind.

4. Garauflagevorrichtung nach einem der vorangehenden Ansprüche, wobei im ersten Bereich die unterste Materialschicht (23) aus ferromagnetischem Metall ist.

5. Garauflagevorrichtung nach einem der vorangehenden Ansprüche, wobei der erste Bereich zusammenhängend ist und mindestens 50%, insbesondere mindestens 80%, insbesondere mindestens 90%, insbesondere mindestens 95%, der Bodenfläche der Garauflagevorrichtung einnimmt.

6. Garauflagevorrichtung nach einem der vorangehenden Ansprüche, wobei an der Unterseite des zweiten Bereichs mindestens ein Haftelement (4) angeordnet ist.

7. Garauflagevorrichtung nach Anspruch 7, wobei das mindestens eine Haftelement (4) einen Haftreibungskoeffizienten aufweist, welcher grösser, insbesondere doppelt so gross, insbesondere dreimal so gross, insbesondere fünfmal so gross, ist als der Haftreibungskoeffizient der Unterseite des Bodens ohne Haftelement.

8. Garauflagevorrichtung nach einem der Ansprüche 6 bis 7, wobei das mindestens eine Haftelement (4) aus einem Nichtmetall ist, insbesondere aus Kunststoff, insbesondere Silikon.

9. Garauflagevorrichtung nach einem der Ansprüche 6 bis 8, wobei das mindestens eine Haftelement (4) an seiner Unterseite gegen eine Glaskeramikfläche einen Haftreibungskoeffizienten grösser als 0.7, insbesondere grösser 1, insbesondere grösser als 2, insbesondere grösser als 5, aufweist.

10. Garauflagevorrichtung nach einem der Ansprüche 6 bis 9, wobei das mindestens eine Haftelement (4) eine Mehrzahl von Noppen umfasst.

11. Garauflagevorrichtung nach nach einem der vorangehenden Ansprüche, wobei die Garauflagevorrichtung derart ausgestaltet ist, dass die Garplatte (2) beim Abstellen der Garauflagevorrichtung auf einer Ebene sich nicht nach unten auf die Haltevorrichtung (1) abstützt.

12. Garauflagevorrichtung nach Anspruch 1, 2, 3 oder 11, wobei die Haltevorrichtung (1) einen ersten horizontalen Stützbereich (51) und die Garplatte (2) einen zweiten horizontalen Stützbereich (52) aufweisen, wobei der vertikale Abstand (d1) zwischen dem ersten Stützbereich (51) und der Unterseite der Haltevorrichtung (1) kleiner, insbesondere mehr als 1 mm kleiner, insbesondere mehr als 3 mm kleiner, als der vertikale Abstand (d2) zwischen dem zweiten Stützbereich (52) und der Unterseite der Garplatte (2) ist, insbesondere wobei der erste Stützbereich (51) und der zweite Stützbereich (52) gegeneinander gerichtet sind.

13. Garauflagevorrichtung nach einem der vorangehenden Ansprüche, wobei das Blechteil (16) derart angeordnet und ausgestaltet ist, dass es die Garplatte (2) in beide Horizontalrichtungen horizontal führt.

14. Garauflagevorrichtung nach einem der vorangehenden Ansprüche, wobei das Isolierelement (15) aus Silikon ist und/oder wobei das Blechteil (16) Löcher aufweist.

15. Garauflagevorrichtung nach einem der vorangehenden Ansprüche, wobei das nicht-ferromagnetische Metall Aluminium oder Kupfer ist.

## Claims

1. Cooking support device, in particular a Teppan-Yaki cooking support device, comprising a cooking plate (2) and a holding device (1) holding the cooking plate (2), a bottom (14, 21) made of metal, comprising a first region with ferromagnetic metal (21), the first region being part of the cooking plate (2), and a second region without ferromagnetic metal (14), the second region being part of the holding device (1),
**characterised in that** the holding device (1) comprises a sheet metal part (16) arranged and adapted to guide the cooking plate (2) horizontally and/or the cooking plate (2) is up against a vertical portion of the sheet metal part (16), wherein the holding device (1) comprises a gripping device (11, 12) made of wood and the sheet metal part (16) is insulated from the gripping device (11, 12) by means of an insulating element (15) made of plastic.

2. Cooking support device according to one of the preceding claims, wherein the holding device (1) is adapted as a holding frame (14).

3. Cooking support device according to one of the preceding claims, wherein the cooking plate (2) and the holding device (1) can be separated from each other.

4. Cooking support device according to one of the preceding claims, wherein in the first region the lowest material layer (23) is made of ferromagnetic metal.

5. Cooking support device according to one of the preceding claims, wherein the first region is continuous and occupies at least 50%, in particular at least 80%, in particular at least 90%, in particular at least 95%, of the bottom area of the cooking support device.

6. Cooking support device according to one of the preceding claims, wherein at least one adhesive element (4) is arranged at the bottom side of the second region.

7. Cooking support device according to claim 7, wherein the at least one adhesive element (4) has a coefficient of static friction which is greater, in particular twice as great, in particular three times as great, in particular five times as great, than the coefficient of static friction of the bottom side of the bottom without adhesive element.

8. Cooking support device according to one of claims 6 to 7, wherein the at least one adhesive element (4) is made of a non-metal, in particular of plastic, in particular silicone.

9. Cooking support device according to one of claims 6 to 8, wherein the at least one adhesive element (4) has a coefficient of static friction at its bottom side against a glass ceramic surface greater than 0.7, in particular greater than 1, in particular greater than 2, in particular greater than 5.

10. Cooking support device according to one of claims 6 to 9, wherein the at least one adhesive element (4) comprises a plurality of nipples.

11. Cooking support device according to one of the preceding claims, wherein the cooking support device is adapted such that the cooking plate (2) does not rest downwards on the holding device (1) when the cooking support device is placed on a plane.

12. Cooking support device according to claim 1, 2, 3 or 11, wherein the holding device (1) has a first horizontal support region (51) and the cooking plate (2) has a second horizontal support region (52), wherein the vertical distance (d1) between the first support regino (51) and the bottom of the holding device (1) is smaller, in particular more than 1 mm smaller, in particular more than 3 mm smaller, than the vertical distance (d2) between the second support region (52) and the underside of the cooking plate (2), in particular wherein the first support region (51) and the second support region (52) are directed towards each other.

13. Cooking support device according to one of the preceding claims, wherein the sheet metal part (16) is arranged and adapted to guide the cooking plate (2) horizontally in both horizontal directions.

14. Cooking support device according to one of the preceding claims, wherein the insulating element (15) is made of silicone and/or wherein the sheet metal part (16) comprises holes.

15. Cooking support device according to any of the preceding claims, wherein the non-ferromagnetic metal is aluminum or copper.

## Revendications

1. Dispositif de support de cuisson, en particulier un dispositif de support de cuisson Teppan-Yaki, comprenant une plaque de cuisson (2) et un dispositif de retenue (1) retenant la plaque de cuisson (2), un fond (14, 21) en métal, présentant une première zone avec du métal ferromagnétique (21), dans lequel la première zone fait partie de la plaque de cuisson (2), et une seconde zone sans métal ferromagnétique (14), dans lequel la seconde zone fait partie du dispositif de retenue (1), **caractérisé en ce que** le dispositif de retenue (1) présente une partie de tôle (16) qui est agencée et configurée de telle manière qu'elle guide horizontalement la plaque de cuisson (2) et/ou la plaque de cuisson (2) affleure une section verticale de la partie de tôle (16), dans lequel le dispositif de retenue (1) présente un dispositif de préhension (11, 12) en bois et la partie de tôle (16) est isolée contre le dispositif de préhension (11, 12) au moyen d'un élément isolant (15) en matière plastique.

2. Dispositif de support de cuisson selon l'une des revendications précédentes, dans lequel le dispositif de retenue (1) est configuré comme cadre de retenue (14).

3. Dispositif de support de cuisson selon l'une des revendications précédentes, dans lequel la plaque de cuisson (2) et le dispositif de retenue (1) sont séparables l'un de l'autre.

4. Dispositif de support de cuisson selon l'une des revendications précédentes, dans lequel dans la première zone la couche de matériau (23) la plus basse est en métal ferromagnétique.

5. Dispositif de support de cuisson selon l'une des revendications précédentes, dans lequel la première zone est continue et occupe au moins 50 %, en particulier au moins 80 %, en particulier au moins 90 %, en particulier au moins 95 % de la surface de fond du dispositif de support de cuisson.

6. Dispositif de support de cuisson selon l'une des revendications précédentes, dans lequel au moins un élément adhésif (4) est agencé au niveau du côté inférieur de la seconde zone.

7. Dispositif de support de cuisson selon la revendication 7, dans lequel l'au moins un élément adhésif (4) présente un coefficient d'adhérence qui est plus grand, en particulier deux fois plus grand, en particulier trois fois plus grand, en particulier cinq fois plus grand que le coefficient d'adhérence du côté inférieur du fond sans élément adhésif.

8. Dispositif de support de cuisson selon l'une des revendications 6 à 7, dans lequel l'au moins un élément adhésif (4) est en un non-métal, en particulier en matière plastique, en particulier une silicone.

9. Dispositif de support de cuisson selon l'une des revendications 6 à 8, dans lequel l'au moins un élément adhésif (4) présente au niveau de son côté inférieur contre une surface vitrocéramique un coefficient d'adhérence supérieur à 0,7, en particulier supérieur à 1, en particulier supérieur à 2, en particulier supérieur à 5.

10. Dispositif de support de cuisson selon l'une des revendications 6 à 9, dans lequel l'au moins un élément adhésif (4) comporte une pluralité de bosses.

11. Dispositif de support de cuisson selon l'une des revendications précédentes, dans lequel le dispositif de support de cuisson est configuré de telle manière que la plaque de cuisson (2) ne s'appuie pas vers le bas sur le dispositif de retenue (1), lors du dépôt du dispositif de support de cuisson sur un plan.

12. Dispositif de support de cuisson selon la revendication 1, 2, 3 ou 11, dans lequel le dispositif de retenue (1) présente une première zone d'appui (51) horizontale et la plaque de cuisson (2) présente une seconde zone d'appui (52) horizontale, dans lequel la distance verticale (d1) entre la première zone d'appui (51) et le côté inférieur du dispositif de retenue (1) est inférieur, en particulier inférieur de plus de 1 mm, en particulier inférieur de plus de 3 mm, à la distance verticale (d2) entre la seconde zone d'appui (52) et le côté inférieur de la plaque de cuisson (2), en particulier dans lequel la première zone d'appui (51) et la seconde zone d'appui (52) sont dirigées l'une contre l'autre.

13. Dispositif de support de cuisson selon l'une des revendications précédentes, dans lequel la partie de tôle (16) est agencée et configurée de telle manière qu'elle guide horizontalement la plaque de cuisson (2) dans les deux sens horizontaux.

14. Dispositif de support de cuisson selon l'une des revendications précédentes, dans lequel l'élément isolant (15) est en silicone et/ou dans lequel la partie de tôle (16) présente des trous.

15. Dispositif de support de cuisson selon l'une des revendications précédentes, dans lequel le métal non ferromagnétique est de l'aluminium ou du cuivre.
